# EUROPÄISCHE PATENTSCHRIFT

(11) **EP 0 928 392 B1**
(45) Veröffentlichungstag und Bekanntmachung des Hinweises auf die Patenterteilung: **06.09.2000**
(21) Anmeldenummer: 97943898.3
(22) Anmeldetag: 24.09.1997
(51) Int. Cl.: F16L 59/02, E04B 1/78

(54) **DÄMMSTOFFELEMENT**
INSULATING ELEMENT
ELEMENT ISOLANT

(30) Priorität: 28.09.1996 DE 29616964 U
(43) Veröffentlichungstag der Anmeldung: 14.07.1999
(73) Patentinhaber: Deutsche Rockwool Mineralwoll-GmbH, 45966 Gladbeck (DE)
(72) Erfinder: KLOSE, Gerd-Rüdiger, D-46886 Dorsten (DE)
(74) Vertreter: Wanischeck-Bergmann, Axel, Dipl.-Ing.
(86) Internationale Anmeldenummer: EP9705244
(87) Internationale Veröffentlichungsnummer: WO9813642

(56) Entgegenhaltungen:
- DE-A- 4 110 454
- DE-U- 29 603 918
- US-A- 4 354 878

## Beschreibung

Die Erfindung betrifft ein Dämmstoffelement aus Mineralfasern, die mit einem Bindemittel und / oder durch mechanische Bearbeitung, wie Vernadelung, Verfilzung oder dergleichen miteinander verbunden sind, bei welchem zumindest eine Mineralfaserschicht und zumindest eine Oberflächenschicht vorgesehen sind, wobei die Oberflächenschicht eine gegenüber der Mineralfaserschicht zumindest in Teilbereichen erhöhte Rohdichte aufweist.

Baustoffe, wie hier in Rede stehende Dämmstoffelemente, die nach einer Norm hergestellt und überwacht werden, müssen beispielsweise gemäß DIN 18165, Teil I, gekennzeichnet werden. Unter Dämmstoffelementen sind hierbei Baustoffe zu verstehen, die entweder aus anorganischen oder organischen sowie aus Mischungen der beiden voranstehend genannten Fasern bestehen. Die Fasern sind durch Bindemittel oder durch Vernadelung, Verfilzung oder dergleichen miteinander verbunden, wobei auch eine Kombination von Bindemitteln und mechanischer Bearbeitung, wie Vernadelung, Verfilzung oder dergleichen vorgesehen sein kann. Hierbei besteht die Anforderung, daß derartige Faserdämmstoffe gekennzeichnet werden und daß die Kennzeichnung möglichst umfangreiche Auskunft über die Faserdämmstoffe gibt. Es ist hierbei sinnvoll, Stoffart und Lieferform, Anwendungszweck, Wärmeleitfähigkeitsgruppe, Brandverhalten, Dicke, Länge, Breite, Name und Anschrift des Herstellers, Herstellwerk und / oder ein einheitliches Überwachungszeichen als Kennzeichnung aufzubringen.

In der Regel ist in den einschlägigen Normen festgelegt, daß die Kennzeichnung ersatzweise auf der Verpackung angeordnet sein kann. Diese Vorgehensweise hat jedoch den Nachteil, daß nach dem Einbau der Dämmstoffe eine Identifizierung nicht mehr oder nicht mehr ohne spezielle Fachkenntnisse oder umfassende Untersuchungen möglich ist. In der Regel findet bei der Anwendung von Baustoffen in Gebäuden auch keine Dokumentation statt, die über Jahre archiviert wird. Bei einem geregelten Rückbau einer Anlage oder eines Gebäudes ist eine sortenreine Trennung der verschiedenen Abfall-Fraktionen wünschenswert, damit die Abfall-Fraktionen verwertet, verbrannt oder deponiert werden können. Im Zuge des zunehmenden Umweltschutzes ist zukünftig mit entsprechenden Verordnungen zu rechnen, die entsprechende Kennzeichnungen an den Baustoffen, und hier insbesondere an den Faserdämmstoffen, wie den hier in Rede stehenden Dämmstoffelementen erforderlich machen, um diesen Verordnungen und dem gesteigerten Umweltbewußtsein Rechnung zu tragen.

In dem zur Zeit gültigen Kreislauf-Wirtschafts-Abfall-Gesetz ist bereits festgelegt, daß die Hersteller von Produkten auch die Verantwortung für die künftigen Abfälle haben. Insbesondere unter diesem Gesichtspunkt ist eine gute Identifizierbarkeit der Produkte erforderlich. Es ist deshalb wünschenswert, daß die Dämmstoffe so gekennzeichnet werden, daß sie auch nach längerer Gebrauchsdauer identifizierbar sind.

Aus dem Stand der Technik, beispielsweise der DE 296 03 918 U1 ist eine Fasermatte mit einem auf mindestens einer Hauptoberfläche der Fasermatte fixierten, gitterartigen Trägermaterial bekannt, bei welcher zwischen dem Trägermaterial und der Fasermatte ein Kennzeichnungsstreifen angeordnet ist, der an seiner dem Trägermaterial zugewandten Seite eine Beschriftung aufweist. Nachteil dieser vorbekannten Fasermatte ist jedoch, daß die Befestigung des Kennzeichnungsstreifens mittels des Trägermaterials erfolgt, d. h., daß beim Rückbau des Fasermaterials dafür Sorge getragen werden muß, daß das Trägermaterial und die Fasermatte nicht voneinander getrennt werden, so daß der dazwischen liegende Kennzeichnungsstreifen verlorgengeht, der ausschließlich Informationen der eingangs genannten Art aufweist.

Eine andere Technik sieht vor, daß auf der Oberfläche der Faserdämmstoffe Farben aufgetragen werden, was jedoch hinsichtlich der Brandverhütungsanforderungen bedenklich ist. Im übrigen stellen derartige Farben chemische Bestandteile dar, die negative Auswirkungen auf einen eventuell aufgetragenen Putz haben können. Von daher ist die Anwendung von Farben auf den Oberflächen der Faserdämmstoffe bedenklich.

Ausgehend von diesem Stand der Technik liegt der Erfindung die **Aufgabe** zugrunde, ein Dämmstoffelement der gattungsgemäßen Art zu schaffen, das in einfacher Weise verarbeitbar und beim Rückbau Recyclingprozessen zuführbar ist. Hierbei sollen insbesondere die Kennzeichnungen beim Rückbau erhalten bleiben, so daß eine entsprechende Zuordnung zu bestimmten Recyclingprozessen erleichtert ist.

Die **Lösung** dieser Aufgabenstellung sieht vor, daß zumindest auf der Oberflächenschicht mit der erhöhten Rohdichte eine Kleber- oder Putzaffine Beschichtung aufgebracht ist, die eine von der Mineralfaserschicht abweichende Farbgebung hat.

Nach der Erfindung hergestellte Dämmstoffelemente können somit unterschiedliche Beschichtungen aufweisen, die entsprechend einem Farbschlüssel unterschiedliche Eigenschaften der Dämmstoffelemente repräsentieren. Da die Beschichtung fest mit der Oberflächenschicht verbunden ist, bleibt die Beschichtung auch beim Rückbau Bestandteil des Dämmstoffelementes, so daß das Dämmstoffelement anhand seiner Beschichtung identifiziert und dem geeigneten Recycling-prozeß zugeführt werden kann. Darüberhinaus dient die von der Minerfaserschicht in ihrer Farbgebung abweichende Beschichtung auch als Einbauhilfe, da durch die Beschichtung die gewünschte Orientierung angezeigt werden kann.

Nach einem weiteren Merkmal der Erfindung ist vorgesehen, daß jede Oberflächenschicht eine Beschichtung aufweist, welche Beschichtungen eine abweichende Farbgebung haben. Eine derartige Ausgestaltung hat den Vorteil, daß insbesondere bei der Verarbeitung derartiger Dämmstoffelemente in einfacher Weise die richtige Orientierung des Dämmstoffelementes erkannt werden kann, wenn das Dämmstoffelement beispielsweise zwei Oberflächenschichten mit einer gegenüber der Mineralfaserschicht erhöhten Rohdichte aufweist.

Es ist ferner vorgesehen, daß die Beschichtung vollflächig, streifenartig und / oder in einem Raster aufgetragen ist. Diese Ausgestaltung bietet dem Hersteller die vergrößerte Möglichkeit, unterschiedliche Dämmstoffelemente mit unterschiedlichen Kennzeichnungen zu versehen. Hierdurch wird einerseits eine farbliche Kennzeichnung und andererseits eine geometrische Kennzeichnung vorgenommen, die bestimmte Parameter der Dämmstoffelemente anzeigen können.

Nach einem weiteren Merkmal der Erfindung ist vorgesehen, daß die Beschichtungen auf beiden Oberflächenschichten in unterschiedlicher geometrischer Ausgestaltung aufgetragen sind. Nach diesem Merkmal sind somit weitere Möglichkeiten der Vervielfältigung unterschiedlicher Kennzeichnungen für unterschiedliche Dämmstoffelemente vorgesehen.

Die Beschichtung ist vorzugsweise als Wasserglas-Mischung mit verseifungsbeständigen Kunststoff-Zusätzen ausgebildet. Alternativ kann die Beschichtung aus einem zementgebundenen, mit Kunststoffen modifizierten Mörtel oder Kleber bestehen, der die Verarbeitung der Dämmstoffelemente erleichtert und vereinfacht.

Schließlich ist nach einem weiteren Merkmal der Erfindung vorgesehen, daß zwischen der Beschichtung und der Oberflächenschicht Kennzeichnungen angeordnet sind und daß die Beschichtung zumindst im Bereich der Kennzeichnungen derart transparent ist, daß die Kennzeichnungen durch die Beschichtung erkennbar sind. Diese Möglichkeit läßt sich beispielsweise dadurch schaffen, daß die Kennzeichnungen eine möglichst dunkle Färbung, beispielsweise dunkelblau oder schwarz aufweisen, wogegen die Beschichtung zwar farbig, jedoch auch zumindest teilweise transparent ausgebildet, beispielsweise in hellen Pastelltönen eingefärbt ist.

Mineralwoll-Dämmstoffe, wie die hier in Rede stehenden Dämmstoffelemente eignen sich aufgrund ihrer physikalischen Eigenschaften sowie wegen ihrer Nichtbrennbarkeit gut für die Dämmung von Außenwänden. Auf derartigen Außenwänden von Gebäuden werden die Dämmstoffelemente vollflächig oder partiell aufgeklebt und mit armierten Putzschichten abgedeckt. Hierzu werden beispielsweise Kunststoffputze und mit Kunststoff vergütete Mineralputze verwendet, die Gesamtdicken zwischen ca. 6 und 20 mm aufweisen. Die auf diese Weise auf Wände, Decken und sonstige Flächen aufgebrachten Baustoffkombinationen werden Wärmedämm-Verbundsysteme genannt.

Die Dämmstoffelemente weisen eine über die Höhe gleichmäßige Rohdichte aufweisende Mineralfaserschicht auf. Auf zumindest einer Hauptoberfläche dieser Mineralfaserschicht ist eine Oberflächenschicht angeordnet, die eine gegenüber der Mineralfaserschicht zumindest in Teilbereichen erhöhte Rohdichte hat. Es kann aber auch vorgesehen sein, daß das Dämmstoffelement über seine Gesamthöhe hinsichtlich der Rohdichte variiert. So kann die äußere Zone eines solchen Dämmstoffelementes in einer Dicke von z. B. 5 bis 50 mm, vorzugsweise 15 bis 25 mm deutlich höher verdichtet sein, als der eigentliche Dämmstoffkörper. Vorzugsweise werden in der verdichteten Zone auch die Fasern in einem flacheren Winkel zu den Hauptoberflächen orientiert, als im Inneren des Dämmstoffkörpers.

Die eine erhöhte Rohdichte aufweisenden Bereiche des Dämmstoffelementes bewirken einen größeren mechanischen Widerstand des Dämmstoffelementes, beispielsweise gegenüber Druckbeanspruchung oder bei Druckbeanspruchung durch einen Halteteller, wenn der Windsog auf das Dämmsystem einwirkt. Zusätzlich zu der verdichteten Außenzone kann das Dämmstoffelement auch wandseitig eine verdichtete Zone, d. h. Oberflächenschicht aufweisen. Weiterhin kann vorgesehen sein, daß die Struktur des Dämmstoffelementes auf den jeweiligen Verwendungszweck abgestellt ist und hinsichtlich der Höhe als auch der flächigen Erstreckung in weiten Grenzen verändert wird, um optimale Gebrauchseigenschaften zu erzielen, d. h., daß die Rohdichte sowohl im Bereich der Oberflächenschicht als auch senkrecht zur Oberflächenschicht variiert ist.

Bei der Verarbeitung derartiger Dämmstoffelemente ist in der Regel eine bestimmte Orientierung einzuhalten, d. h., daß die Dämmstoffelemente mit einer vorbestimmten Oberflächenschicht auf die tragenden Flächen aufgebracht werden müssen, um ein optimales Wärmedämmergebnis zu erzielen und gleichzeitig eine ausreichende Festigkeit der Verbindung der Dämmstoffelemente am Gebäude und der Putzschicht auf den Dämmstoffelementen zu ermöglichen. Wird beispielsweise ein Dämmstoffelement mit einer verdichteten Außenoberflächenschicht so montiert, daß diese Zone die Putzschicht tragen kann, dann muß durch eine geeignete Kennzeichnung dafür gesorgt werden, daß die Bauhandwerker diese Absicht auch richtig umsetzen. Diese Kennzeichnung wird dadurch erzielt, daß die großen Oberflächen, d. h. die Oberflächenschichten mit der erhöhten Rohdichte mit jeweils Kleber- oder Putz-affinen Beschichtungen versehen sind. Diese Beschichtungen sind unterschiedlich farbig ausgebildet, so daß der Bauhandwerker bei der Verarbeitung der Dämmstoffelemente sofort erkennt, in welcher Weise er diese Dämmstoffelemente an der Gebäudewand anzuordnen hat.

Durch entsprechende Erläuterungen oder durch die Beschichtungen durchscheinende Beschriftungen, Symbole oder dergleichen kann die Bedeutung der jeweiligen Beschichtung bzw. der gewünschten Orientierung der Platte dargestellt werden. Die kennzeichnenden Beschichtungen können hierbei vollflächig, streifenartig oder in einem Raster aufgetragen sein, wobei die Erscheinungsformen miteinander kombiniert werden können, beispielsweise dergestalt, daß seitens der Trägerwand und somit seitens des aufzutragenden Klebers ein vollflächiger und außenseitig ein Auftrag in einem bestimmten Raster aufgebracht ist.

Die Beschichtungsmassen bestehen beispielsweise aus zementgebundenen, mit Kunststoffen modifizierten Mörteln oder Klebern. Bewährt haben sich weiterhin Wasserglas-Mischungen mit verseifungsbeständigen Kunststoff-Zusätzen.

Durch die unterschiedliche Einfärbung der auf die Oberflächenschichten der Dämmstoffelemente aufgetragenen Beschichtungen ist zudem eine gute Kontrolle der Bauwerksoberfläche im Hinblick auf die gewünschte Orientierung der Dämmstoffelemente möglich. Ferner hat sich die spezielle Farbgebung der Beschichtung dahingehend als vorteilhaft erwiesen, daß sich die Dämmstoffelemente hinsichtlich herstellerbedingter und qualitätsbedingter Unterschiede in einfacher Weise erkennen lassen. Hierdurch wird eine Kontrolle der eingebauten Dämmstoffqualitäten ohne weiteren Aufwand möglich. Schließlich dienen diese Beschichtungen als Identifikationsmerkmale bei einem Rückbau eines Wärmedämm-Verbundsystems und der damit erforderlichen Rückführung der gebrauchten Dämmstoffe zu den Herstellerwerken im Rahmen der in Gesetzen festgelegten Produktverantwortung.

## Patentansprüche

1. Dämmstoffelement aus Mineralfasern, die mit einem Bindemittel und / oder durch mechanische Bearbeitung, wie Vernadelung, Verfilzung oder dergleichen miteinander verbunden sind, bei welchem zumindest eine Mineralfaserschicht und zumindest eine Oberflächenschicht vorgesehen sind, wobei die Oberflächenschicht eine gegenüber der Mineralfaserschicht zumindest in Teilbereichen erhöhte Rohdichte aufweist,
**dadurch gekennzeichnet,**
daß zumindest auf der Oberflächenschicht mit der erhöhten Rohdichte eine Kleber- oder Putz-affine Beschichtung aufgebracht ist, die eine von der Mineralfaserschicht abweichende Farbgebung hat.

2. Dämmstoffelement nach Anspruch 1,
**dadurch gekennzeichnet,**
daß jede Oberflächenschicht eine Beschichtung aufweist, welche Beschichtungen eine abweichende Farbgebung haben.

3. Dämmstoffelement nach Anspruch 1,
**dadurch gekennzeichnet,**
daß die Beschichtung vollflächig, streifenartig und / oder in einem Raster aufgetragen ist.

4. Dämmstoffelement nach Anspruch 1,
**dadurch gekennzeichnet,**
daß die Beschichtungen auf beiden Oberflächenschichten in unterschiedlicher geometrischer Ausgestaltung aufgetragen sind.

5. Dämmsstoffelement nach Anspruch 1,
**dadurch gekennzeichnet,**
daß die Beschichtung als Wasserglas-Mischung mit verseifungsbeständigen Kunststoff-Zusätzen ausgebildet ist.

6. Dämmstoffelement nach Anspruch 1,
**dadurch gekennzeichnet,**
daß die Beschichtung aus einem zementgebundenen, mit Kunststoffen modifizierten Mörtel oder Kleber besteht.

7. Dämmstoffelement nach Anspruch 1,
**dadurch gekennzeichnet,**
daß zwischen der Beschichtung und der Oberflächenschicht Kennzeichnungen angeordnet sind und daß die Beschichtung zumindest im Bereich der Kennzeichnungen derart transparent ist, daß die Kennzeichnungen durch die Beschichtung hindurch erkennbar sind.

## Claims

1. Insulating element made of mineral fibers which are interconnected by means of a bonding agent and/or mechanical treatment such as needle punching, needle felting or the like, in which insulating element are provided at least one layer of mineral fibers and one surface layer, said surface layer having at least in partial portions thereof a bulk density which is increased compared to the layer of mineral fibers,
**characterized in**
that at least to said surface layer having the increased bulk density a cement or plaster-affine coating is applied, of which the coloration varies from the layer of mineral fibers.

2. Insulating element according to claim 1,
**characterized in**
that each surface layer has a coating, which coatings have a variant coloration.

3. Insulating element according to claim 1,
**characterized in**
that the coating is applied all-over, in a strip-like and/or grid-like fashion.

4. Insulating element according to claim 1,
**characterized in**
that the coatings on both surface layers are applied in a different geometrical configuration.

5. Insulating element according to claim 1,
**characterized in**
that the coating is configured as a water glass mixture with synthetic additives which are resistant to saponification.

6. Insulating element according to claim 1,
**characterized in**
that the coating consists of a mortar or bonding agent which is cement-bound and modified with synthetic materials.

7. Insulating element according to claim 1,
**characterized in**
that between the coating and the surface layer markings are arranged, and that the coating is transparent at least in the region of said markings in such a manner that the markings can be recognized through the coating.

## Revendications

1. Elément isolant en fibres minérales qui sont reliées les unes aux autres par un liant et/ou par façonnage mécanique tel que travail à aiguilles, feutrage ou équivalent, pour lequel au moins une couche de fibres minérales et au moins une couche de surface sont prévues, la couche de surface présentant une masse volumique apparente accrue par rapport à la couche de fibres minérales au moins dans des zones partielles,
caractérisé en ce
qu'une enduction de colle ou une enduction affinée d'enduit est appliquée au moins sur la couche de surface avec la masse volumique apparente accrue, enduction qui présente une coloration différente de la couche de fibres minérales.

2. Elément isolant selon la revendication 1,
caractérisé en ce
que chaque couche de surface présente une enduction, lesquelles enductions ont une coloration différente.

3. Elément isolant selon la revendication 1,
caractérisé en ce
que l'enduction est appliquée sur toute la surface, est de type bande et/ou en treillis.

4. Elément isolant selon la revendication 1,
caractérisé en ce
que les enductions sont appliquées sur les deux couches de surface en différentes configurations géométriques.

5. Elément isolant selon la revendication 1,
caractérisé en ce
que l'enduction est configurée comme un mélange de verre soluble avec des additifs synthétiques résistants à la saponification.

6. Elément isolant selon la revendication 1,
caractérisé en ce
que l'enduction est en mortier lié à du ciment, modifié avec des matières synthétiques ou en colle.

7. Elément isolant selon la revendication 1,
caractérisé en ce
que des caractéristiques d'identification sont placées entre l'enduction et la couche de surface et que l'enduction est transparente, au moins dans la zone des caractéristiques d'identification, de telle manière que les caractéristiques d'identification peuvent être reconnues à travers l'enduction.
